# EUROPEAN PATENT APPLICATION

(11) **EP 4 216 379 A1**
(43) Date of publication of application: **26.07.2023**
(21) Application number: 22834826.4
(22) Date of filing: 09.09.2022
(51) Int. Cl.: H01S 3/067, G02B 27/09

(54) **LIGHT BEAM GENERATION METHOD, APPARATUS, AND DEVICE, STORAGE MEDIUM, AND ELECTRONIC DEVICE**

(30) Priority: 03.12.2021 CN 202111461113
(71) Applicant: Wuhan Raycus Fiber Laser Technologies Co., Ltd, East Lake Hi-Tech Development Zone Wuhan, Hubei 430000 (CN)
(72) Inventor: DU, Tianyi, (CN); YAN, Dapeng, (CN); SHI, Jianhong, (CN); HU, Haowei, (CN); LIU, Zheng, (CN); WU, Jie, (CN); LI, Chang, (CN)
(74) Representative: Maiwald GmbH
(86) International application number: PCT/CN2022/118216
(87) International publication number: WO 2023/098221

(57) **Abstract**

The present disclosure provides a method, an apparatus and a device for generating a light beam, a storage medium, and an electronic device. The method includes: obtaining an initial light beam with a spot of an initial shape; performing a disturbance operation on the initial light beam to obtain a target light beam with a spot of a target shape; and outputting the target light beam. With the above-described technical solutions, the problem of higher complexity of the process for generating a light beam with a target shape in the related art is solved.

## Description

### TECHNICAL FIELD

The present disclosure relates to the field of lasers, and more particularly, to a method, an apparatus and a device for generating a light beam, a storage medium, and an electronic device.

### BACKGROUND

Optical fiber lasers are widely used in the fields of industrial processing, national defense, scientific research and the like due to their small volume, compact structure, simple heat management, maintenance-free all-optical fiber structure, good output beam quality, high power, and the like.

With the development of the processing field in the direction of intelligent processing, for different application scenarios, a fiber laser is required to provide adjustable and stable laser capability distribution output, so as to flexibly respond to complex process requirements of industrial processing, realize one-machine multipurpose, and respond to market personalization requirements. For example, in the field of welding and cutting, an annular spot can effectively suppress splash during processing, realize zero splash processing, and avoid generation of processing defects.

In the prior art, commonly used light beam adjusting devices for achieving the annular spot mainly include an optical wedge structure device, a multi-light-source-module coupling structure device, and the like. The optical wedge structure device may switch coupling of a single light source module with the center or the outer layer of a 2-in-1 transmission optical fiber by the optical wedge movement, so as to achieve the annular spot. In the multi-light-source-module coupling structure device, a 2-in-1 optical fiber structure is used, a variable number of modules may be coupled into each optical fiber structure by lenses as required, and a light beam may be shaped by adjusting respective powers of the light source modules of a central optical fiber and a peripheral optical fiber, so as to achieve the annular spot.

In summary, the prior art generally utilizes spatial optics to perform laser beam shaping, and it is often necessary to implement the laser beam shaping through a larger spatial shaping structure and a more complex operation.

No effective solution to a problem of higher complexity of a process of generating a light beam with a target shape or the like in the related art has not been proposed.

### TECHNICAL PROBLEM

Embodiments of the present disclosure provide a method, an apparatus, and a device for generating a light beam, a storage medium, and an electronic device, so as to at least solve the problem of higher complexity of the process for generating a light beam with a target shape in the related art.

### TECHNICAL SOLUTIONS

According to one embodiment of the present disclosure, there is provided a method for generating a light beam, including:
obtaining an initial light beam with a spot of an initial shape;
performing a disturbance operation on the initial light beam to obtain a target light beam with a spot of a target shape; and
outputting the target light beam.

Optionally, the performing of the disturbance operation on the initial light beam to obtain the target light beam includes:
obtaining the target shape;
determining a target disturbance parameter corresponding to the disturbance operation according to the initial shape and the target shape; and
performing the disturbance operation on the initial light beam using the target disturbance parameter to obtain the target light beam.

Optionally, the determining of the target disturbance parameter corresponding to the disturbance operation according to the initial shape and the target shape includes:
determining power distribution variation between an initial power distribution corresponding to the initial shape and a target power distribution corresponding to the target shape; and
determining a disturbance parameter satisfying the power distribution variation as the target disturbance parameter.

Optionally, determining of the disturbance parameter satisfying the power distribution variation as the target disturbance parameter includes at least one of:
determining a target number of turns corresponding to the power distribution variation as the target disturbance parameter, where the target number of turns is a number of turns of a first power delivery optical fiber wound on a winding wheel, and the first power delivery optical fiber is configured to carry the initial light beam; and
determining a target distance corresponding to the power distribution variation as the target disturbance parameter, where the target distance is a distance by which a second power delivery optical fiber is extruded to bend, and the second power delivery optical fiber is configured to carry the initial light beam.

Optionally, the performing of the disturbance operation on the initial light beam using the target disturbance parameter to obtain the target light beam includes:
on condition that the target disturbance parameter includes the target number of turns, winding the first power delivery optical fiber by the target number of turns to obtain a third power delivery optical fiber; and inputting the initial light beam into the third power delivery fiber to obtain the target light beam output from the third power delivery optical fiber; and
on condition that the target disturbance parameter includes the target distance, extruding the second power delivery optical fiber to bend by the target distance to obtain a fourth power delivery optical fiber; and inputting the initial light beam into the fourth power delivery optical fiber to obtain the target light beam output from the fourth power delivery optical fiber.

Optionally, after the outputting the target optical beam, the method further includes:
detecting an error between the target shape of the target optical beam and a preset shape;
on condition that the error between the target shape of the target optical beam and the preset shape is less than an error threshold, outputting the target light beam; and
on condition that the error between the target shape of the target optical beam and the preset shape is greater than or equal to the error threshold, adjusting the target shape of the target light beam until the error between the target shape and the preset shape is less than the error threshold, and outputting a light beam with the error less than the error threshold.

Optionally, the obtaining of the initial light beam includes:
obtaining a light beam emitted by a laser as a candidate light beam; and
adjusting the candidate light beam to a light beam with a preset power distribution to obtain the initial light beam, where the preset power distribution includes a Gaussian distribution or a near Gaussian distribution.

Optionally, the target shape is an annular shape or a point annular shape.

According to another embodiment of the present disclosure, there is further provided an apparatus for generating a light beam, including: a power delivery optical fiber and a mode disturbing device, where the power delivery optical fiber is disposed within the mode disturbing device,
the power delivery optical fiber is configured to obtain an initial light beam with a spot of an initial shape; and output a target light beam with a spot of a target shape;
the mode disturbing device is configured to perform a disturbance operation on the initial light beam in the power delivery optical fibers to obtain the target light beam.

According to another embodiment of the present disclosure, the mode disturbing device comprises a winding-type mode disturbing device or an extrusion-bending-type mode disturbing device.

According to another embodiment of the present disclosure, the apparatus further includes a processor connected to the mode disturbing device,
where the processor is configured to: obtain the target shape; determine power distribution variation between an initial power distribution corresponding to the initial shape and a target power distribution corresponding to the target shape; and determine a disturbance parameter satisfying the power distribution variation as a target disturbance parameter, where, the target disturbance parameter includes a target number of turns and/or a target distance, the target number of turns is a number of turns of a first power delivery optical fiber wound on a winding wheel, the target distance is a distance by which a second power delivery optical fiber is extruded to bend, and the power delivery optical fibers include the first power delivery optical fiber and/or the second power delivery optical fiber; and
on condition that the target disturbance parameter includes the target number of turns, wind the first power delivery optical fiber by the target number of turns to obtain a third power delivery optical fiber; and input the initial light beam into the third power delivery fiber to obtain the target light beam output from the third power delivery optical fiber; and
on condition that the target disturbance parameter includes the target distance, extrude the second power delivery optical fiber to bend by the target distance to obtain a fourth power delivery optical fiber; and input the initial light beam into the fourth power delivery optical fiber to obtain the target light beam output from the fourth power delivery optical fiber.

According to another embodiment of the present disclosure, the apparatus further includes an output device connected to an output terminal of the mode disturbing device,
where the output device is configured to: detect an error between the target shape of the target optical beam and a preset shape; on condition that the error between the target shape of the target optical beam and the preset shape is less than an error threshold, output the target light beam; and on condition that the error between the target shape of the target optical beam and the preset shape is greater than or equal to the error threshold, adjust the target shape of the target light beam until the error between the target shape and the preset shape is less than the error threshold, and output a light beam with the error less than the error threshold.

According to another embodiment of the present disclosure, the apparatus further includes a laser, a first transmission optical fiber and a second transmission optical fiber, where
the laser is connected to an input terminal of the power delivery optical fiber via the first transmission optical fiber, and an output terminal of the power delivery optical fibers is connected to an input terminal of the output device via the second transmission optical fiber; and
the processor is further configured to obtain a light beam emitted by the laser as a candidate light beam; and adjust the candidate light beam to a light beam with a preset power distribution to obtain the initial light beam, where the preset power distribution includes a Gaussian distribution or a near Gaussian distribution.

According to another embodiment of the present disclosure, there is further provided a device for generating a light beam, including: an obtaining module for obtaining an initial light beam with a spot of an initial shape;
a processing module for performing a disturbance operation on the initial light beam to obtain a target light beam with a spot of a target shape; and
a first output module for outputting the target light beam.

According to another embodiment of the present disclosure, the processing module includes:
a first obtaining unit for obtaining the target shape;
a determination unit for determining power distribution variation between an initial power distribution corresponding to the initial shape and a target power distribution corresponding to the target shape; and determining a disturbance parameter satisfying the power distribution variation as a target disturbance parameter; and
a processing unit for performing the disturbance operation on the initial light beam using the target disturbance parameter to obtain the target light beam.

According to another embodiment of the present disclosure, the determination unit is for at least one of:
determining a target number of turns corresponding to the power distribution variation as the target disturbance parameter, where the target number of turns is a number of turns of a first power delivery optical fiber wound on a winding wheel, and the first power delivery optical fiber is configured to carry the initial light beam; and
determining a target distance corresponding to the power distribution variation as the target disturbance parameter, where the target distance is a distance by which a second power delivery optical fiber is extruded to bend, and the second power delivery optical fiber is configured to carry the initial light beam.

According to another embodiment of the present disclosure, the device further includes:
a detection module for, after outputting the target light beam, detecting an error between the target shape of the target optical beam and a preset shape;
a second output module for, on condition that the error between the target shape of the target optical beam and the preset shape is less than an error threshold, outputting the target light beam; and
a third output module for, on condition that the error between the target shape of the target optical beam and the preset shape is greater than or equal to the error threshold, adjusting the target shape of the target light beam until the error between the target shape and the preset shape is less than the error threshold, and outputting the light beam with the error less than the error threshold.

According to another embodiment of the present disclosure, the obtaining module includes:
a second obtaining unit for obtaining a light beam emitted by a laser as a candidate light beam; and
an adjusting unit for adjusting the candidate light beam to a light beam with a preset power distribution to obtain the initial light beam, where the preset power distribution includes a Gaussian distribution or a near Gaussian distribution.

According to yet another aspect of an embodiment of the present disclosure, there is further provided a computer-readable storage medium storing a computer program executable to perform the method described above.

According to yet another aspect of an embodiment of the present disclosure, there is further provided an electronic device, including a memory, a processor, and a computer program stored in the memory and operable on the processor, where the processor is configured to perform the method described above through the computer program.

### BENEFICIAL EFFECT

In the embodiments of the present disclosure, the initial light beam with the spot of the initial shape is obtained; the disturbance operation is performed on the initial light beam to obtain the target light beam with the spot of the target shape; the target light beam is outputted. That is, the initial light beam with the spot of the initial shape is obtained, the disturbance operation can be performed on the initial light beam to obtain the target light beam with the spot of the target shape, and the target light beam is outputted, thereby enabling the initial light beam with the spot of the initial shape to be adjusted to the target light beam with the spot of the target shape by performing the disturbance operation on the initial light beam. With the above-described technical solutions, the problem of higher complexity of the process for generating a light beam with a target shape in the related art is solved, and a technical effect of reducing the complexity of the process for generating a light beam with a target shape is achieved.

### BRIEF DESCRIPTION OF THE DRAWINGS

The accompanying drawings described here are used for providing further understanding of the embodiments of the present disclosure, and constitute a part of the embodiments of the present disclosure. Schematic embodiments of the present disclosure and description thereof are used for illustrating the present disclosure and not intended to improperly limit the present disclosure. In the accompanying drawings:
FIG. 1 is a structural block diagram of hardware of a computer terminal used in a light beam generation method according to an embodiment of the present disclosure;
FIG. 2 is a flowchart of a light beam generation method according to an embodiment of the present disclosure;
FIG. 3 is a schematic diagram of a light beam generation flow according to an embodiment of the present disclosure;
FIG. 4 is a structural block diagram of a light beam generation apparatus according to an embodiment of the present disclosure;
FIG. 5 is a structural block diagram of an alternative power delivery optical fiber according to an embodiment of the present disclosure;
FIG. 6 is a structural block diagram of an alternative winding-type mode disturbing device according to an embodiment of the present disclosure;
FIG. 7 is a structural block diagram of an alternative extrusion-type mode disturbing device according to an embodiment of the present disclosure;
FIG. 8 is a block diagram of an alternative connection structure of a processor and a mode disturbing device according to an embodiment of the present disclosure;
FIG. 9 is a structural diagram of a transmission optical fiber according to an embodiment of the present disclosure;
FIG. 10 is a schematic diagram of a spot output by a power delivery optical fiber according to an embodiment of the present disclosure;
FIG. 11 is a schematic diagram of a spot output by a multi-core structure transmission optical fiber according to an embodiment of the present disclosure;
FIG. 12 is a block diagram of an alternative connection structure of a laser, a mode disturbing device, and an output device according to an embodiment of the present disclosure; and
FIG. 13 is a structural block diagram of a light beam generation device according to an embodiment of the present disclosure.

### DETAILED DESCRIPTION OF THE EMBODIMENTS

In order that technical solutions in the embodiments of the present disclosure may be better understood by those skilled in the art, technical solutions in embodiments of the present disclosure will be clearly and completely described below in conjunction with drawings in the embodiments of the present disclosure. Obviously, the described embodiments are only a part of embodiments of the present disclosure, rather than all the embodiments. Based on the embodiments in the present disclosure, all other embodiments obtained by those skilled in the art without creative work should fall within the protection scope of the present disclosure.

It should be illustrated that the terms "first" , "second" , etc. in the description and claims of the present disclosure and the drawings are used to distinguish similar objects, and do not have to be used to describe a specific order or sequence. It should be understood that the data so used are interchangeable as appropriate so that the embodiments of the present disclosure described herein can be implemented in an order other than those illustrated or described herein. For example, the terms "comprising" and "having", as well as any variations thereof, are intended to cover a non-exclusive inclusion. For example, a process, a method, a system, product, or apparatus that includes a series of steps or units is not necessarily limited to those steps or units expressly listed, but may include other steps or units not expressly listed or inherent to such process, method, product, or apparatus.

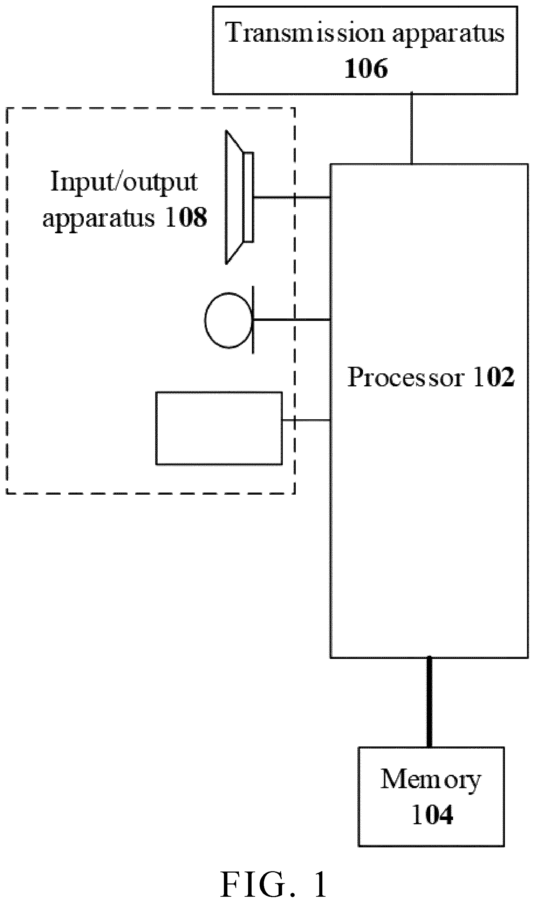

The method embodiments provided by the embodiments of the present disclosure may be executed in a computer terminal, a computer terminal, or a similar computing device. Running on the computer terminal is taken as an example. FIG. 1 is a structural block diagram of hardware of a computer terminal in a light beam generation method according to an embodiment of the present disclosure. As shown in Fig. 1, the computer terminal may include one or more (only one shown in Fig. 1) processor 102 (the processor 102 may include, but is not limited to, a processing device such as a Micro Control Unit (MCU) or a Field Programmable Gate Array (FPGA) and a memory 104 configured to store data. In one exemplary embodiment, the computer terminal may further include a transmission apparatus 106 configured as a communication function and an input/output apparatus 108. It can be understood by those skilled in the art that the structure shown in Fig. 1 is merely illustrative and does not limit the structure of the above computer terminal. For example, the computer terminal may also include more or fewer components than shown in Fig. 1, or has a different configuration that is equivalent to the function shown in FIG. 1 or more than the function shown in FIG. 1.

The memory 104 may be used to a computer program, for example, a software program of an application software and a module, such as a computer program corresponding to a method for generating a light beam in an embodiment of the present disclosure. The processor 102 executes various functional applications and data processing by running the computer program stored in the memory 104, that is, implements the above-described method. The memory 104 may include a high-speed random access memory, and may further include a non-volatile memory, such as one or more magnetic storage devices, a flash memory, or other non-volatile solid-state memory. In some examples, the memory 104 may further include a memory which is remotely set with respect to the processor 102, and these remote memories may be connected to the computer terminal through a network. Examples of the above network include, but are not limited to, the Internet, an intranet, a local area network, a mobile communication network, and combinations thereof.

The transmission apparatus 106 is configured to receive or send data over a network. The above specific network examples may include a wireless network provided by a communication provider of the computer terminal. In one instance, the transmission apparatus 106 includes a Network Interface Controller (NIC) that may be connected to other network devices through the base station to communicate with the Internet. In one instance, the transmission apparatus 106 may be a Radio Frequency (RF) module for communicating with the Internet wirelessly.

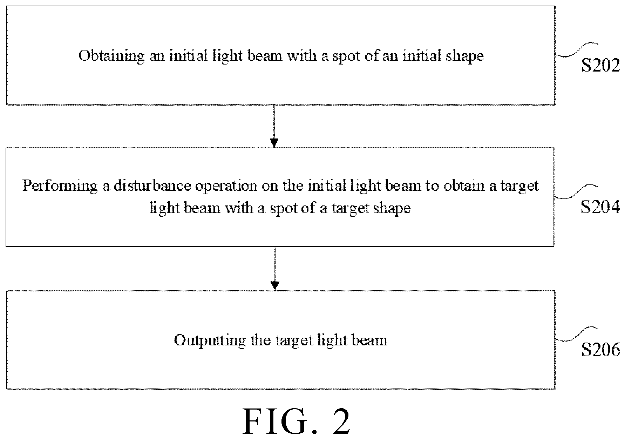

Amethod for generating a light beam is provided in the present embodiment, and may be applicable to the computer terminal. FIG. 2 is a flowchart of a method for generating a light beam according to an embodiment of the present disclosure. The flow includes the following steps.

At step S202, an initial light beam with a spot of an initial shape is obtained.

At step S204, a disturbance operation is performed on the initial light beam to obtain a target light beam with a spot of a target shape.

At step S206, the target light beam is outputted.

With the above-mentioned steps, the initial light beam with the spot of the initial shape is obtained, the disturbance operation can be performed on the initial light beam to obtain the target light beam with the spot of the target shape, and the target light beam is outputted, thereby enabling the initial light beam with the spot of the initial shape to be adjusted to the target light beam with the spot of the target shape by performing the disturbance operation on the initial light beam. With the above-described technical solutions, the problem of higher complexity of the process for generating a light beam with a target shape in the related art is solved, and a technical effect of reducing the complexity of the process for generating a light beam with a target shape is achieved.

In the technical solution provided in the above-mentioned step S202, the obtained spot of the initial light beam is an initial shape. For example, the initial shape may include, but be not limited to, a circle shape, a square shape, a polygon shape, and the like.

In one exemplary embodiment, the initial light beam may be obtained, but is not limited to, by obtaining a light beam emitted by a laser as a candidate light beam; and adjusting the candidate light beam to a light beam with a preset power distribution to obtain the initial light beam, where the preset power distribution includes a Gaussian distribution or a near Gaussian distribution.

Alternatively, in the present embodiment, the power distribution of the light beam emitted by the laser is adjusted to a Gaussian distribution or a near Gaussian distribution to obtain the initial light beam, and the power distribution of the beam emitted by the laser is concentrated so as to adjust the spot of the initial light beam.

In the technical solution provided in the above-mentioned step S204, the target light beam can be obtained by, but not limited to, performing a disturbance operation on the initial light beam and adjusting the spot of the initial light beam from the initial shape to the target shape.

Alternatively, in the present embodiment, the spot of the target shape may be, but not limited to, a shape including an annular shape, a point annular shape, and the like, which satisfies process requirements and market personalization requirements.

In one exemplary embodiment, the target beam with the spot of the target shape may be obtained by, but not limited to, obtaining the target shape; determining a target disturbance parameter corresponding to the disturbance operation according to the initial shape and the target shape; and performing the disturbance operation on the initial light beam using the target disturbance parameter to obtain the target light beam.

Alternatively, in the present embodiment, the target disturbance parameter corresponding to the disturbance operation performed on the initial light beam may be, but not limited to, determined according to the initial shape of the initial light beam and the target shape to which the initial light beam is adjusted, and the disturbance operation is performed on the initial light beam using the target disturbance parameter to obtain the target light beam with a spot of a target shape.

In one exemplary embodiment, the target disturbance parameter corresponding to the disturbance operation can be determined by, but not limited to, determining power distribution variation between an initial power distribution corresponding to the initial shape and a target power distribution corresponding to the target shape; and determining a disturbance parameter satisfying the power distribution variation as the target disturbance parameter.

Alternatively, in the present embodiment, the power distribution variation may be, but not limited to, power distribution amplitude variation or power distribution range variation between the initial power distribution including the initial shape and the target power distribution of the target shape, and the like.

In one exemplary embodiment, the target disturbance parameter may be determined, by, but not limited to, at least one of following manners.

A first manner is to determine a target number of turns corresponding to the power distribution variation as the target disturbance parameter, where the target number of turns is a number of turns of a first power delivery optical fiber wound on a winding wheel, and the first power delivery optical fiber is configured to carry the initial light beam.

Alternatively, in the present embodiment, a winding wheel may include, but be not limited to, a driving winding wheel and a driven winding wheel. The driving winding wheel has a smaller diameter, and a groove is provided on the wheel for winding a first power delivery optical fiber. A diameter of the driven winding wheel is larger than the curved diameter of the power delivery optical fiber, and a groove is provided on the wheel for winding the first power delivery optical fiber. A length of the optical fiber wound or released by the driving winding wheel is consistent with a length of the optical fiber released or wound by the driven winding wheel, thereby preventing the power delivery optical fiber from being pulled.

A second manner is to determine a target distance corresponding to the power distribution variation as the target disturbance parameter, where the target distance is a distance by which a second power delivery optical fiber is extruded to bend, and the second power delivery optical fiber is configured to carry the initial light beam.

In one exemplary embodiment, the target light beam may be obtained, by, but not limited to, one of following manners.

A first manner is to, on condition that the target disturbance parameter includes the target number of turns, bend the first power delivery optical fiber by the target number of turns to obtain a third power delivery optical fiber; and input the initial light beam into the third power delivery fiber to obtain the target light beam output from the third power delivery optical fiber.

Alternatively, in the present embodiment, it is possible, but not limited, to rotate the first power delivery optical fiber on the driving winding wheel driven by the driving winding wheel motor so as to wind the target number of turns, so that the power distribution of the light beam in the first power delivery optical fiber can be changed uniformly and continuously by changing the number of turns wound on the first power delivery optical fiber. The driven winding wheel is driven by the driven winding wheel motor to wind the redundant optical fiber, and the driven winding wheel motor and the driving winding wheel motor can be interconnected to ensure that the length of the optical fiber wound or released by the driving winding wheel is consistent with the length of the optical fiber released or released by the driven winding wheel, thereby preventing the optical fiber from being pulled.

A second manner is to, on condition that the target disturbance parameter includes the target distance, extrude the second power delivery optical fiber to bend by the target distance to obtain a fourth power delivery optical fiber; and input the initial light beam into the fourth power delivery optical fiber to obtain the target light beam output from the fourth power delivery optical fiber.

Alternatively, in the present embodiment, it is possible, but not limited, to extrude the second power delivery optical fiber to bend by the target distance so as to change a bending degree of the optical fiber uniformly and continuously, thereby changing the power distribution of the light beam in the power delivery optical fiber.

In the technical solution provided in the above-mentioned step S206, the target light beam with the spot of the target shape can be obtained by, but not limited to, performing a disturbance operation on the initial light beam.

In one exemplary embodiment, the light beam can be outputted by, but not limited to, detecting an error between the target shape of the target optical beam and a preset shape; on condition that the error between the target shape of the target optical beam and the preset shape is less than an error threshold, outputting the target light beam; and on condition that the error between the target shape of the target optical beam and the preset shape is greater than or equal to the error threshold, adjusting the target shape of the target light beam until the error between the target shape and the preset shape is less than the error threshold, and outputting the light beam with the error less than the error threshold.

Alternatively, in the present embodiment, if the error between the target shape of the target light beam and the preset shape is greater than or equal to the error threshold, the target shape of the target light beam is adjusted until the error between the target shape and the preset shape is less than the error threshold, thereby ensuring the accuracy of the spot shape of the output light beam.

In order to better understand the process of the method for generating the light beam, the flow of the method for generating the light beam will be illustrated in connection with an alternative embodiment, but the method is not intended to limit the technical solution of the embodiment of the present disclosure.

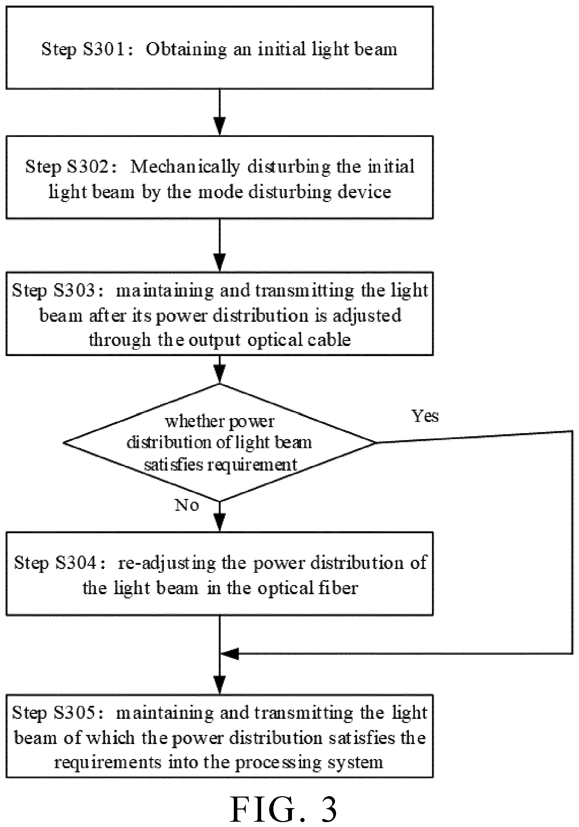

In the present embodiment, there is provided a method for generating a light beam. FIG. 3 is a schematic diagram of a light beam generation flow according to an embodiment of the present disclosure. An all-fiber-type laser output light beam adjusting device of the embodiment of the present disclosure may include, but be not limited to, a single-module fiber laser, a mode disturbing device, a power delivery optical fiber, an output optical cable, and the like arranged in sequence. As shown in FIG. 3, the flow specifically includes the following steps.

At step S301, an initial light beam is obtained, and a light beam of which an output spot power distribution outputted by a high power single-mode optical fiber is a Gaussian distribution or a near Gaussian distribution is obtained as the initial light beam.

At step S302, the initial light beam is mechanically disturbed by the mode disturbing device to change power distribution of the light beam in the multi-core optical fiber, so that the initial light beam is coupled to a center core and a ring core of the multi-core optical fiber in an adjustable ratio, respectively, or coupled to the center core and the ring core at the same time.

At step S303, the light beam after its power distribution is adjusted is maintained and transmitted through the output optical cable. The optical waveguide core layer of the output optical cable may be, but not limited to, a pure silica glass structure. The optical waveguide cladding layer of the output optical cable may be, but not limited to, a fluorine-doped glass structure. The diameter of the center core of the output optical cable may be, but not limited to, 35~100pm. The diameter of the ring core of the output optical cable may be, but not limited to, 60~300µm. The numerical aperture of the optical waveguide core layer of the output optical cable may be, but not limited to, 0. 1-0.22.

At step S304, the power distribution of the light beam in the optical fiber is maintained or re-adjusted, and the light beam after its power distribution is adjusted is transmitted to the transmission optical cable through an optical fiber coupling. The transmission optical fiber may also be at least three-layer waveguide structure including the output optical fiber core and wrapped around the periphery of the output optical fiber core. The transmission optical cable may maintain or re-adjust the power distribution of the light beam in the optical fiber. If the power distribution after adjustment satisfies requirement, the light beam is maintained. If the power distribution after adjustment does not satisfy the requirement, the power distribution of the light beam is adjusted again. Finally, the power distribution of the light beam presents an annular distribution or a point-annular distribution or other power distribution satisfying the market personalization requirements and processes.

At step S305, the light beam of which the power distribution satisfies the requirements is maintained and transmitted into the processing system.

Through the description of the above implementations, those having ordinary skill in the art can clearly understand that the method according to the above embodiment may be implemented by means of software plus a necessary general hardware platform, and of course, may also be implemented through hardware, but in many cases, the former is a better implementation. Based on such understanding, the essence of technical solution of the embodiments of the present disclosure, or in other words, the part of the technical solutions making contributions to the conventional art, may be embodied in the form of a software product stored in a storage medium (such as a Read-Only Memory (ROM)/Random Access Memory (RAM), a magnetic disk and an optical disc), including a number of instructions for enabling a terminal device (which may be a mobile phone, a computer, a server, or a network device, etc.) to perform the methods described in various embodiments of the present disclosure.

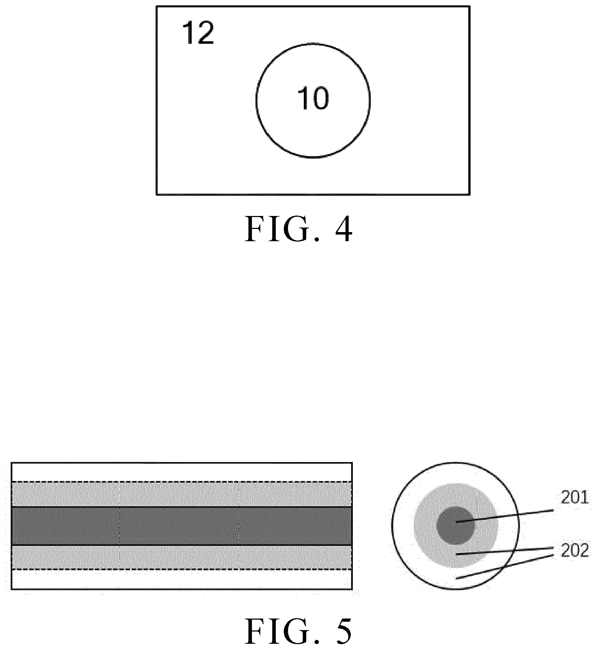

FIG. 4 is a structural block diagram of an apparatus for generating a light beam according to an embodiment of the present disclosure. As shown in FIG. 4, the apparatus includes: a power delivery optical fiber 10 and a mode disturbing device 12, where the power delivery optical fiber 10 is disposed within the mode disturbing device 12,
the power delivery optical fibers 10 is configured to obtain an initial light beam with a spot of an initial shape; and output a target light beam with a spot of a target shape; and
the mode disturbing device 12 is configured to perform a disturbance operation on the initial light beam in the power delivery optical fibers 10 to obtain the target light beam.

With the above-mentioned embodiment, the initial light beam with the spot of the initial shape is obtained, the disturbance operation can be performed on the initial light beam to obtain the target light beam with the spot of the target shape, and the target light beam is outputted, thereby enabling the initial light beam with the spot of the initial shape to be adjusted to the target light beam with the spot of the target shape by performing the disturbance operation on the initial light beam. With the above-described technical solutions, the problem of higher complexity of the process for generating a light beam with a target shape in the related art is solved, and a technical effect of reducing the complexity of the process for generating a light beam with a target shape is achieved.

Alternatively, in the present embodiment, the power delivery optical fiber may include, but be not limited to, an optical fiber core 201 and an optical fiber cladding layer 202 wrapped around the periphery of the optical fiber core. FIG. 5 is a structural block diagram of an alternative power delivery optical fiber according to an embodiment of the present disclosure. As shown in FIG. 5, a size of the diameter of the power delivery optical fiber core is marked as R1, which is greater than or equal to 20µm and less than or equal to 200µm. A size of the thickness of the power delivery optical fiber cladding layer is marked as D2, which is greater than or equal to 105µm and less than or equal to 600µm. A size of the diameter of the power delivery optical fiber cladding layer is marked as R2, and R2=R1+D2. The power delivery optical fiber cladding layer may be, but not limited to, at least two layers of waveguide structure, and may be, but not limited to, an inner cladding layer wrapped around the periphery of the input optical fiber core and an outer cladding layer wrapped around the periphery of the inner cladding layer. As such, a multi-mode optical waveguide layer is formed between the inner cladding layer and the outer cladding layer to transmit the light beam. A refractive index of the outer cladding layer is less than a refractive index of the inner cladding layer, and the refractive index of the inner cladding layer is less than a refractive index of the power delivery optical fiber core. In an actual production process, in addition to the inner cladding layer and the outer cladding layer, there is a coating layer on the periphery of the outer cladding layer.

Alternatively, in the present embodiment, the power delivery optical fiber is sensitive to bending disturbance. Under the disturbance of the mode disturbing device, the power delivery optical fiber generates a macro-bending, and a portion of the light beam transmitted by the optical fiber core enters the inner cladding layer and is uniformly distributed in the inner cladding layer. The more intense the disturbance, the more light is transmitted from the fiber core into the inner cladding layer, so that the transmission beam is changed from a dot-like distribution in which only the fiber core is distributed to a dot-annular-like distribution in which the fiber core and the inner cladding layer are evenly distributed, and the power proportion of the central spot and the annular spot is flexibly adjusted. Compared with the geometric optical shaping, the structure of the mode disturbing device is simple, the output stability of a dot-like spot of the optical fiber is strong, the adaptability to the use environment is strong, and the power delivery optical fiber has the characteristics of a low transmission loss and a highly acceptable threshold power, thereby improving the power utilization rate.

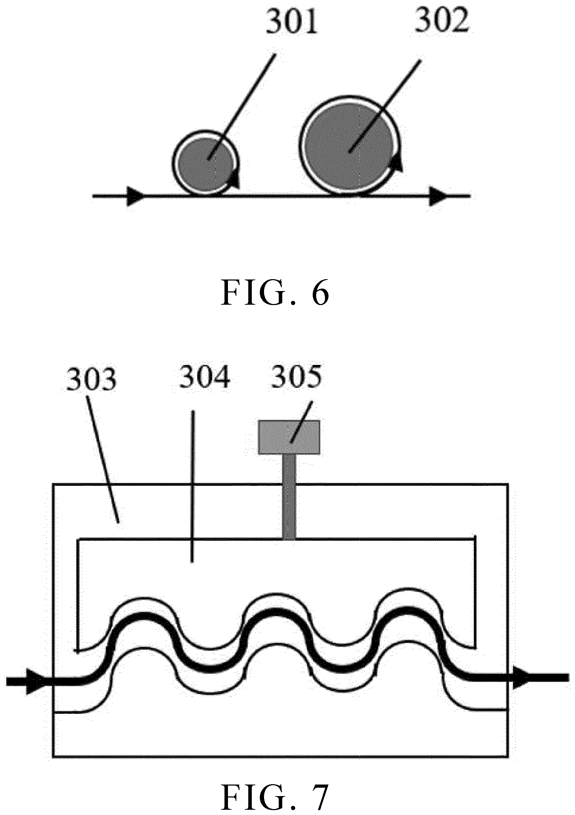

Alternatively, in the present embodiment, the mode disturbing device may include, but not limited to, a winding-type or an extrusion-bending-type mode disturbing device and the like. The winding-type structure can include, but be not limited to, a driving winding wheel 301, a driving winding wheel motor, a driven winding wheel 302, and a driven winding wheel motor. FIG. 6 is a block diagram of an alternative winding-type mode disturbing device according to an embodiment of the present disclosure. As shown in FIG. 6, the driving winding wheel 301 has a smaller diameter, and a groove is provided on the wheel for winding an optical fiber. The driving winding wheel 301 may be driven by the driving winding wheel motor to be rotated so as to wind the optical fiber, and the power distribution of the optical beam in the power delivery optical fiber may be changed uniformly and continuously by changing a number of turns of the wound optical fiber. The diameter of the driven winding wheel 302 is larger than the bending diameter of the power delivery optical fiber, and a groove is provided on the wheel for winding the optical fiber. The driven c wheel can be driven by the driving winding wheel motor to wind the redundant optical fiber, and the driven winding wheel motor and the driving winding wheel motor can be interconnected to ensure that the length of the optical fiber wound or released by the driving winding wheel 301 is consistent with the length of the optical fiber released or wound by the driven winding wheel 302, thereby preventing the optical fiber from being pulled.

The structure of the extrusion-type mode-disturbing device may include, but be not limited to, a base, an extrusion block, and a driving mechanism, and the like, where the base is provided with an extrusion portion opposite to the extrusion block. FIG. 7 is a block diagram of an alternative extrusion-type mode disturbing device according to an embodiment of the present disclosure. The structure may include, but be not limited to, a base 303, an extrusion block 304, a driving mechanism 305, and the like. As shown in FIG. 7, the driving mechanism 305 is provided on the base 303, and the driving mechanism 305 is connected to the extrusion block 304 to drive the extrusion block 304 to move toward the extrusion portion. The power delivery optical fiber is extruded up and down by means of the extrusion block 304 and the extrusion portion. Extrusion surfaces between the extrusion block 304 and the extrusion portion for extruding the optical fiber are concave and convex surfaces coinciding with each other. The bending degree of the optical fiber may be changed uniformly and continuously by, but not limited to, changing the spacing between the extrusion block 304 and the extrusion portion on the base 303, thereby changing the power distribution of the optical beam in the power delivery optical fiber.

In one exemplary embodiment, the apparatus further includes a processor, where the processor is connected to the mode disturbing device,
the processor is configured to obtain the target shape; determine power distribution variation between an initial power distribution corresponding to the initial shape and a target power distribution corresponding to the target shape; determine a disturbance parameter satisfying the power distribution variation as the target disturbance parameter, where, the target disturbance parameter includes a target number of turns and/or a target distance, the target number of turns is a number of turns of a first power delivery optical fiber wound on a winding wheel, the target distance is a distance by which a second power delivery optical fiber is extruded to bend, and the power delivery optical fibers include the first power delivery optical fiber and/or the second power delivery optical fiber; and
on condition that the target disturbance parameter includes the target number of turns, bend the first power delivery optical fiber by the target number of turns to obtain a third power delivery optical fiber; and input the initial light beam into the third power delivery fiber to obtain the target light beam output from the third power delivery optical fiber;
on condition that the target disturbance parameter includes the target distance, extrude the second power delivery optical fiber to bend by the target distance to obtain a fourth power delivery optical fiber; and input the initial light beam into the fourth power delivery optical fiber to obtain the target light beam output from the fourth power delivery optical fiber.

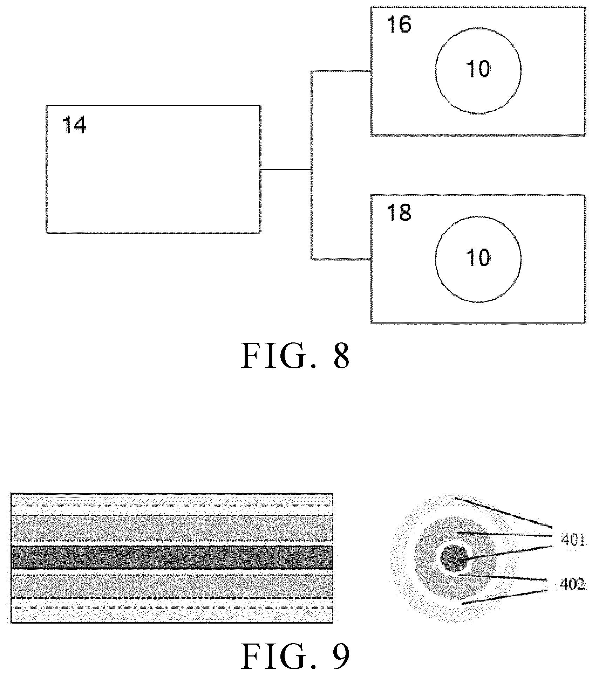

Alternatively, in the present embodiment, the processor 14 may be, but not limited to, connected to the extrusion-type mode disturbing device 16 and the winding-type mode disturbing device 18, in which there is a power delivery optical fiber 10. FIG. 8 is a block diagram of an alternative connection structure between the processor and the mode disturbing device according to an embodiment of the present disclosure. As shown in FIG. 8, the processor may be, but not limited to, configured to obtain a target shape. If the target disturbance parameter includes a target number of turns, the winding-type mode disturbing device is controlled to bend the first power delivery optical fiber by the target number of turns. If the target disturbance parameter includes a target distance, the extrusion-type mode disturbing device is controlled to extrude the second power delivery optical fiber to bend by the target distance.

In one exemplary embodiment, the apparatus further includes an output device, where, the output device is connected to an output terminal of the mode disturbing device.

The output device is configured to, detect an error between the target shape of the target optical beam and a preset shape; on condition that the error between the target shape of the target optical beam and the preset shape is less than an error threshold, and output the target light beam; and on condition that the error between the target shape of the target optical beam and the preset shape is greater than or equal to the error threshold, adjust the target shape of the target light beam until the error between the target shape and the preset shape is less than the error threshold, and output the light beam with the error less than the error threshold.

In one exemplary embodiment, the apparatus further includes a laser, a first transmission optical fiber and a second transmission optical fiber,
the laser is connected to an input terminal of the power delivery optical fiber by the first transmission optical fiber, and an output terminal of the power delivery optical fiber is connected to an input terminal of the output device by the second transmission optical fiber; and
the processor is further configured to obtain a light beam emitted by the laser as a candidate light beam; and adjust the candidate light beam to a light beam with a preset power distribution to obtain the initial light beam, where the preset power distribution includes a Gaussian distribution or a near Gaussian distribution.

Alternatively, in the present embodiment, the transmission optical fiber may be, but not limited to, the same optical fiber as the power delivery optical fiber to maintain an adjusted light beam characteristic and transmit it to the output terminal. FIG. 9 is a structural schematic diagram of a transmission optical fiber according to an embodiment of the present disclosure, and the transmission optical fiber may include, but not limited to, a transmission optical fiber core layer 401 and a transmission optical fiber cladding layer 402, as shown in FIG. 9. The transmission fiber may also be at least three layers of waveguide structure comprising an output optical fiber core and wrapped around the periphery of the output optical fiber core.

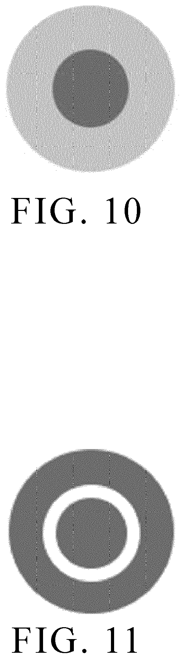

Alternatively, in the present embodiment, the spots outputted by the transmission optical fiber of different structures have different spots. If the transmission optical fiber may be, but not limited to, the same optical fiber as the power delivery optical fiber. FIG. 10 is a schematic diagram of spots outputted by a power delivery optical fiber according to an embodiment of the present disclosure. If the transmission optical fiber has the same structure as the power delivery optical fiber, the transmission optical fiber may output the spot having the shape shown in FIG. 10. FIG. 11 is a schematic diagram of a multi-core structure transmission optical fiber outputting a spot according to an embodiment of the present disclosure. The transmission fiber may be, but not limited to, a multi-core structure. The transmission optical fiber in the multi-core structure may output, but not limited to, a spot as shown in FIG. 11.

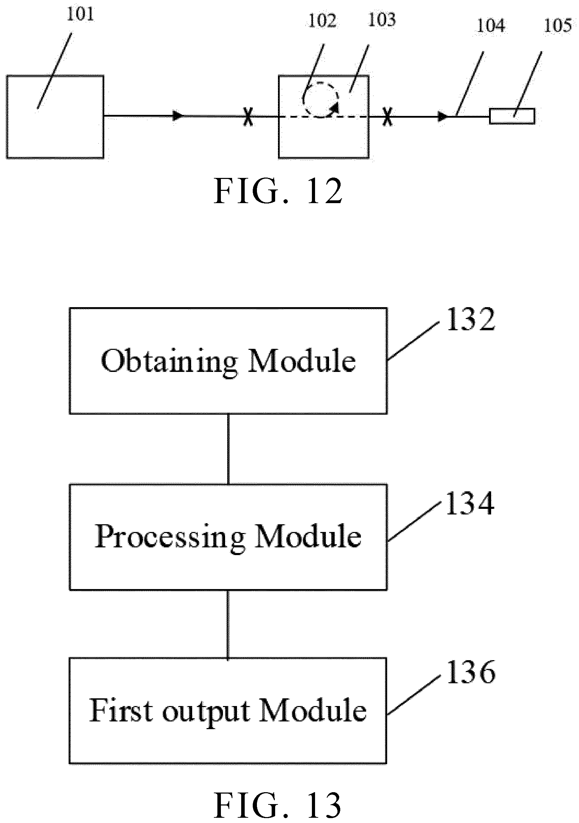

Alternatively, in the present embodiment, the laser is connected to the input terminal of the power delivery optical fiber through a first transmission optical fiber, and the output terminal of the power delivery optical fiber is connected to the input terminal of the output device through a second transmission optical fiber. FIG. 12 is a block diagram of an alternative connection structure of a laser, a mode-disturbing device, and an output device according to an embodiment of the present invention. The structure may include, but not limited to, a single-mode optical fiber laser 101, a power delivery optical fiber 102, a mode disturbing device 103, a transmission optical fiber 104, and an output device 105. As shown in FIG. 12, the laser has a small volume, and an overall structure is compact and stable, thereby facilitating industrial integration.

FIG. 13 is a structural block diagram of a light beam generation device according to an embodiment of the present disclosure. As shown in FIG. 13, the device includes:
an obtaining module 132 for obtaining an initial light beam with a spot of an initial shape;
a processing module 134 for performing a disturbance operation on the initial light beam to obtain a target light beam with a spot of a target shape; and
a first output module 136 for outputting the target light beam.

With the above-mentioned embodiment, the initial light beam with the sport of the initial shape is obtained, the disturbance operation can be performed on the initial light beam to obtain the target light beam with the spot of the target shape, and the target light beam is outputted, thereby enabling the initial light beam with the spot of the initial shape to be adjusted to the target light beam with the spot of the target shape by performing the disturbance operation on the initial light beam. With the above-described technical solutions, the problem of higher complexity of the process for generating a light beam with a target shape in the related art is solved, and a technical effect of reducing the complexity of the process for generating a light beam with a target shape is achieved.

In one exemplary embodiment, the processing module includes:
a first obtaining unit for obtaining the target shape;
a determination unit for determining a target disturbance parameter corresponding to the disturbance operation according to the initial shape and the target shape; and
a processing unit for performing the disturbance operation on the initial light beam using the target disturbance parameter to obtain the target light beam.

In one exemplary embodiment, the determination unit is configured to:
determine power distribution variation between an initial power distribution corresponding to the initial shape and a target power distribution corresponding to the target shape; and
determine a disturbance parameter satisfying the power distribution variation as the target disturbance parameter.

In one exemplary embodiment, the determination unit is configured to at least one of:
determining a target number of turns corresponding to the power distribution variation as the target disturbance parameter, where the target number of turns is a number of turns of a first power delivery optical fiber wound on a winding wheel, and the first power delivery optical fiber is configured to carry the initial light beam; and
determining a target distance corresponding to the power distribution variation as the target disturbance parameter, where the target distance is a distance by which a second power delivery optical fiber is extruded to bend, and the second power delivery optical fiber is configured to carry the initial light beam.

In one exemplary embodiment, the processing module is configured to:
on condition that the target disturbance parameter includes the target number of turns, bend the first power delivery optical fiber by the target number of turns to obtain a third power delivery optical fiber; and input the initial light beam into the third power delivery fiber to obtain the target light beam output from the third power delivery optical fiber;
on condition that the target disturbance parameter includes the target distance, extrude the second power delivery optical fiber to bend by the target distance to obtain a fourth power delivery optical fiber; and input the initial light beam into the fourth power delivery optical fiber to obtain the target light beam output from the fourth power delivery optical fiber.

In one exemplary embodiment, the device further includes:
a detection module for, after outputting the target light beam, detecting an error between the target shape of the target optical beam and a preset shape;
a second output module for, on condition that the error between the target shape of the target optical beam and the preset shape is less than an error threshold, outputting the target light beam; and
a third output module for, on condition that the error between the target shape of the target optical beam and the preset shape is greater than or equal to the error threshold, adjusting the target shape of the target light beam until the error between the target shape and the preset shape is less than the error threshold, and outputting the light beam with the error less than the error threshold.

In one exemplary embodiment, the obtaining module includes:
a second obtaining unit for obtaining a light beam emitted by a laser as a candidate light beam; and
an adjusting unit for adjusting the candidate light beam to a light beam with a preset power distribution to obtain the initial light beam, where the preset power distribution includes a Gaussian distribution or a near Gaussian distribution.

Another embodiment of the present disclosure further provides a storage medium. The storage medium includes a stored program. The program is configured to execute, when executed, any one of the above-mentioned methods.

Optionally, in the present embodiment, the processor may be configured to store a program code for executing the following steps.

At S 1, an initial light beam with a spot of an initial shape is obtained.

At S2, a disturbance operation is performed on the initial light beam to obtain a target light beam with a spot of a target shape.

At S3, the target light beam is outputted.

An embodiment of the present disclosure also provides an electronic device, which includes a memory and a processor. The memory stores a computer program. The processor is configured to run the computer program, so as to execute the steps in any of the above method embodiments.

Optionally, the electronic device may also include a transmission apparatus and an input/output device. The transmission apparatus is connected with the processor, and the input/output device is connected with the processor.

Optionally, in the present embodiment, the processor may be configured to execute the following steps through the computer program.

At S 1, an initial light beam with a spot of an initial shape.

At S2, a disturbance operation is performed on the initial light beam to obtain a target light beam with a spot of a target shape.

At S3, the target light beam is outputted.

Optionally, in the present embodiment, the storage media may include, but is not limited to, any medium that can store a program code, such as a USB flash drive, a Read-Only Memory (ROM for short), a Random Access Memory (RAM for short), a removable hard disk, a magnetic disk, or an optical disc.

Optionally, specific examples for the present embodiment may refer to the examples described in the above embodiments and alternative implementations, and details are not repeated in the present embodiment.

It is apparent that those skilled in the art should appreciate that the above modules and steps of the present disclosure may be implemented by a general-purpose computing device, and they may be centralized in a single computing device or distributed on a network composed of multiple computing devices; in an embodiment, they may be implemented by a program code which is capable of being executed by the computing device, so that they may be stored in a storage device and executed by the computing device; and in some situations, the presented or described steps may be executed in an order different from that described here; or they are made into integrated circuit modules, respectively; or multiple modules and steps of them are made into a single integrated circuit module to realize. Therefore, the present disclosure is not limited to any specific combination of hardware and software.

The above is only the optional embodiments of the present disclosure and not intended to limit the present disclosure; for those skilled in the art, the present disclosure may have various modifications and changes. Any modifications, equivalent replacements, improvements and the like within the principle of the present disclosure should fall within the protection scope of the claims of the present disclosure.

## Claims

1. A method for generating a light beam, **characterized by** comprising:
obtaining an initial light beam with a spot of an initial shape;
performing a disturbance operation on the initial light beam to obtain a target light beam with a spot of a target shape; and
outputting the target light beam.

2. The method of claim 1, **characterized in that** the performing of the disturbance operation on the initial light beam to obtain the target light beam comprises:
obtaining the target shape;
determining a target disturbance parameter corresponding to the disturbance operation based on the initial shape and the target shape; and
performing the disturbance operation on the initial light beam using the target disturbance parameter to obtain the target light beam.

3. The method of claim 2, **characterized in that** the determining of the target disturbance parameter corresponding to the disturbance operation based on the initial shape and the target shape comprises:
determining power distribution variation between an initial power distribution corresponding to the initial shape and a target power distribution corresponding to the target shape; and
determining a disturbance parameter satisfying the power distribution variation as the target disturbance parameter.

4. The method of claim 3, **characterized in that** the determining of the disturbance parameter satisfying the power distribution variation as the target disturbance parameter comprises at least one of:
determining a target number of turns corresponding to the power distribution variation as the target disturbance parameter, wherein the target number of turns is a number of turns of a first power delivery optical fiber wound on a winding wheel, and the first power delivery optical fiber is configured to carry the initial light beam; and
determining a target distance corresponding to the power distribution variation as the target disturbance parameter, wherein the target distance is a distance by which a second power delivery optical fiber is extruded to bend, and the second power delivery optical fiber is configured to carry the initial light beam.

5. The method of claim 4, **characterized in that** the performing of the disturbance operation on the initial light beam using the target disturbance parameter to obtain the target light beam comprises:
on condition that the target disturbance parameter comprises the target number of turns, winding the first power delivery optical fiber by the target number of turns to obtain a third power delivery optical fiber; and inputting the initial light beam into the third power delivery fiber to obtain the target light beam output from the third power delivery optical fiber; and
on condition that the target disturbance parameter comprises the target distance, extruding the second power delivery optical fiber to bend by the target distance to obtain a fourth power delivery optical fiber; and inputting the initial light beam into the fourth power delivery optical fiber to obtain the target light beam output from the fourth power delivery optical fiber.

6. The method of claim 1, **characterized by** further comprising: after the outputting of the target optical beam,
detecting an error between the target shape of the target optical beam and a preset shape;
on condition that the error between the target shape of the target optical beam and the preset shape is less than an error threshold, outputting the target light beam; and
on condition that the error between the target shape of the target optical beam and the preset shape is greater than or equal to the error threshold, adjusting the target shape of the target light beam until the error between the target shape and the preset shape is less than the error threshold, and outputting a light beam with the error less than the error threshold.

7. The method of claim 1, **characterized in that** the obtaining of the initial light beam comprises:
obtaining a light beam emitted by a laser as a candidate light beam; and
adjusting the candidate light beam to a light beam with a preset power distribution to obtain the initial light beam, wherein the preset power distribution comprises a Gaussian distribution or a near Gaussian distribution.

8. The method of claim 1, **characterized in that** the target shape is an annular shape or a point annular shape.

9. An apparatus for generating a light beam, **characterized by** comprising a power delivery optical fiber and a mode disturbing device,
wherein the power delivery optical fiber is disposed within the mode disturbing device;
the power delivery optical fiber is configured to obtain an initial light beam with a spot of an initial shape and output a target light beam with a spot of a target shape; and
the mode disturbing device is configured to perform a disturbance operation on the initial light beam in the power delivery optical fiber to obtain the target light beam.

10. The apparatus of claim 9, **characterized in that** the mode disturbing device comprises a winding-type mode disturbing device or an extrusion-bending-type mode disturbing device.

11. The apparatus of claim 9, **characterized by** further comprising a processor connected to the mode disturbing device,
wherein the processor is configured to: obtain the target shape; determine power distribution variation between an initial power distribution corresponding to the initial shape and a target power distribution corresponding to the target shape; and determine a disturbance parameter satisfying the power distribution variation as a target disturbance parameter, wherein the target disturbance parameter comprises a target number of turns and/or a target distance, the target number of turns is a number of turns of a first power delivery optical fiber wound on a winding wheel, the target distance is a distance by which a second power delivery optical fiber is extruded to bend, and the power delivery optical fiber comprises the first power delivery optical fiber and/or the second power delivery optical fiber; and
on condition that the target disturbance parameter comprises the target number of turns, wind the first power delivery optical fiber by the target number of turns to obtain a third power delivery optical fiber, and input the initial light beam into the third power delivery fiber to obtain the target light beam output from the third power delivery optical fiber; and
on condition that the target disturbance parameter comprises the target distance, extrude the second power delivery optical fiber to bend by the target distance to obtain a fourth power delivery optical fiber; and input the initial light beam into the fourth power delivery optical fiber to obtain the target light beam output from the fourth power delivery optical fiber.

12. The apparatus of claim 11, **characterized by** further comprising an output device connected to an output terminal of the mode disturbing device,
wherein the output device is configured to: detect an error between the target shape of the target optical beam and a preset shape; on condition that the error between the target shape of the target optical beam and the preset shape is less than an error threshold, output the target light beam; and, on condition that the error between the target shape of the target optical beam and the preset shape is greater than or equal to the error threshold, adjust the target shape of the target light beam until the error between the target shape and the preset shape is less than the error threshold, and output a light beam with the error less than the error threshold.

13. The apparatus of claim 12, **characterized by** further comprising: a laser, a first transmission optical fiber and a second transmission optical fiber,
wherein the laser is connected to an input terminal of the power delivery optical fiber via the first transmission optical fiber, and an output terminal of the power delivery optical fibers is connected to an input terminal of the output device via the second transmission optical fiber; and
the processor is further configured to obtain a light beam emitted by the laser as a candidate light beam and adjust the candidate light beam to a light beam with a preset power distribution to obtain the initial light beam, wherein the preset power distribution comprises a Gaussian distribution or a near Gaussian distribution.

14. A device for generating a light beam, **characterized by** comprising:
an obtaining module for obtaining an initial light beam with a spot of an initial shape;
a processing module for performing a disturbance operation on the initial light beam to obtain a target light beam with a spot of a target shape; and
a first output module for outputting the target light beam.

15. The device of claim 14, **characterized in that** the processing module comprises:
a first obtaining unit for obtaining the target shape;
a determination unit for determining power distribution variation between an initial power distribution corresponding to the initial shape and a target power distribution corresponding to the target shape, and determining a disturbance parameter satisfying the power distribution variation as a target disturbance parameter; and
a processing unit for performing the disturbance operation on the initial light beam using the target disturbance parameter to obtain the target light beam.

16. The device of claim 15, **characterized in that** the determination unit is for at least one of:
determining a target number of turns corresponding to the power distribution variation as the target disturbance parameter, wherein the target number of turns is a number of turns of a first power delivery optical fiber wound on a winding wheel, and the first power delivery optical fiber is configured to carry the initial light beam; and
determining a target distance corresponding to the power distribution variation as the target disturbance parameter, wherein the target distance is a distance by which a second power delivery optical fiber is extruded to bend, and the second power delivery optical fiber is configured to carry the initial light beam.

17. The device of claim 14, **characterized by** further comprising:
a detection module for, after outputting the target light beam, detecting an error between the target shape of the target optical beam and a preset shape;
a second output module for, on condition that the error between the target shape of the target optical beam and the preset shape is less than an error threshold, outputting the target light beam; and
a third output module for, on condition that the error between the target shape of the target optical beam and the preset shape is greater than or equal to the error threshold, adjusting the target shape of the target light beam until the error between the target shape and the preset shape is less than the error threshold, and outputting the light beam with the error less than the error threshold.

18. The device of claim 14, **characterized in that** the obtaining module comprises:
a second obtaining unit for obtaining a light beam emitted by a laser as a candidate light beam; and
an adjusting unit for adjusting the candidate light beam to a light beam with a preset power distribution to obtain the initial light beam, wherein the preset power distribution comprises a Gaussian distribution or a near Gaussian distribution.

19. A computer-readable storage medium, **characterized by** storing a computer program executable to perform the method of claim 1.

20. An electronic device, **characterized by** comprising a memory and a processor, wherein a computer program is stored in the memory, and the processor is configured to perform the method of claim 1 through the computer program.
